# EUROPÄISCHE PATENTANMELDUNG

(11) **EP 1 123 884 A1**
(43) Veröffentlichungstag der Anmeldung: **16.08.2001**
(21) Anmeldenummer: 01103021.0
(22) Anmeldetag: 08.02.2001
(51) Int. Cl.: B65G 47/84

(54) **Vorrichtung zum Ablenken von Gegenständen, insbesondere Behältern, von einer Bewegungsbahn**

(30) Priorität: 10.02.2000 DE 20002411 U
(71) Anmelder: Horst, Michael, Dipl.-Ing., 34128 Kassel (DE)
(72) Erfinder: Horst, Michael, Dipl.-Ing., 34128 Kassel (DE)
(74) Vertreter: Freiherr von Schorlemer, Reinfried, Dipl.-Phys.

(57) **Zusammenfassung**

Es wird eine Vorrichtung zum Ablenken von Gegenständen, insbesondere Behältern, von einer Bewegungsbahn beschrieben, auf der die Gegenstände mit einer Transportgeschwindigkeit transportiert werden. Die Vorrichtung enthält eine geschlossene Führungsbahn (3), die hintereinander einen auf die Bewegungsbahn zulaufenden Ablenkabschnitt (3a), ein Rückführabschnitt 3b, einen Sammelabschnitt und einen Beschleunigungsabschnitt (3d) aufweist, eine Mehrzahl von unabhängig voneinander auf der Führungsbahn (3) bewegbaren, im Sammelabschnitt sammelbaren Schiebern (4) und je eine Steuer- und Antriebseinrichtung, mittels derer bei Bedarf der jeweils vorderste Schieber (4) innerhalb des Beschleunigungsabschnitts (3d) auf die Transportgeschwindigkeit der Gegenstände beschleunigbar und positionsgenau an einen ausgewählten Gegenstand heranführbar ist, um diesen im Ablenkabschnitt (3a) seitlich von der Bewegungsbahn (1) zu entfernen. Die Führungsbahn (3) weist eine solche Kontur auf, daß die Schieber (4) quer zur Bewegungsbahn am Anfang des Ablenkabschnitts (3a) allmählich beschleunigt und am Ende des Ablenkabschnitts (3a) allmählich abgebremst werden. Die Führungsbahn (3) und die Schieber (4) sind außerdem mit Mitteln (14 bis 17 bzw. 18 bis 21) versehen, mittels derer die Ausrichtung der Schieber (4) relativ zur Bewegungsbahn zumindest innerhalb des Ablenkabschnitts (3a) im wesentlichen konstant gehalten wird.

## Beschreibung

Die Erfindung betrifft eine Vorrichtung der im Oberbegriff des Anspruchs 1 angegebenen Gattung.

Vorrichtungen zum Ablenken von Gegenständen von einer Bewegungsbahn werden vor allem in Verbindung mit Inspektionseinrichtungen für Behälter in Form von Flaschen, Dosen od. dgl. angewendet. Sie dienen dem Zweck, fehlerhafte Behälter von einem ersten Transportband od. dgl. abzulenken und z. B. auf ein zweites Transportband zu schieben. Die Fehlerhaftigkeit kann sich dabei z. B. dadurch ergeben, daß die Behälter defekt, zu stark verunreinigt oder nicht ausreichend gefüllt sind. Zur Lösung dieser Aufgabe sind insbesondere drei Arten von Ablenkvorrichtungen bekannt.

Ablenkvorrichtungen einer ersten Art (DE 94 07 563 U1) weisen an einer stationären Auswahlstelle einen einzigen, quer zur Bewegungsbahn der Gegenstände hin- und herbeweglichen Schieber auf, um mit diesem ausgewählte Gegenstände wahlweise von der Bewegungsbahn wegzustoßen. Dadurch besteht bei hohen Transportgeschwindigkeiten das Problem, daß der Schieber sehr schnell auf die Gegenstände einwirken muß und diese daher umstoßen kann. Außerdem ist nicht immer gewährleistet, daß der Schieber die Gegenstände zentral trifft, was bei runden Gegenständen dazu führen kann, daß sich diese drehen und dann nicht vollends von der Bewegungsbahn abgelenkt werden.

Bei Ablenkvorrichtungen einer zweiten Art (DE 195 22 217 A1, CH 547 218, US 4 501 365) wird dieses Problem dadurch überwunden, daß eine Vielzahl von Schiebern vorgesehen ist, die auf einer Endlosbahn mit einer der Transportgeschwindigkeit der Gegenstände entsprechenden Geschwindigkeit umlaufen und mittels einer steuerbaren Weiche wahlweise in einer inaktiven Durchlaufstellung gehalten oder in einer aktive, auf die Bewegungsbahn zulaufende Ablenkbahn gelenkt werden können. Nachteile dieser Konstruktion bestehen darin, daß die Weichen und deren Steuereinrichtungen störanfällig sind und unterschiedliche Abstände zwischen den Gegenständen auf der Bewegungsbahn nur schwer berücksichtigt werden können. Außerdem muß der Transport der Schieber synchron zum Transport der Gegenstände erfolgen und jeder Schieber verschiebbar in einer eigenen Führung gelagert sein, so daß sich eine insgesamt sehr aufwendige Konstruktion ergibt. Vorteilhaft ist dagegen, daß die Ablenkbahn so geformt sein kann, daß die Schieber und mit ihnen die abgelenkten Gegenstände in Querrichtung zunächst langsam beschleunigt, dann schnell ausgelenkt und danach allmählich abgebremst werden, so daß auch bei kurzer Baulänge der Vorrichtung keine Gefahr besteht, daß die Gegenstände beim Ablenkvorgang umgeworfen werden.

Schließlich ist eine dritte Art von Vorrichtungen entsprechend der eingangs bezeichneten Gattung bekannt (DE 31 30 308 A1). Hierbei wird eine Vielzahl von Schiebern, die unabhängig voneinander auf einer endlosen Führungsbahn umlaufen, in einem Sammelabschnitt magazinartig gesammelt. Ist die Ablenkung eines Gegenstandes erwünscht, wird der im Sammelabschnitt jeweils am weitesten vorn stehende Schieber zunächst mittels einer Steuer- und Antriebseinrichtung innerhalb eines Beschleunigungsabschnitts auf die Transportgeschwindigkeit der Gegenstände beschleunigt, positionskorreliert an den fehlerhaften Gegenstand herangeführt und dann in einem Ablenkabschnitt der Führungsbahn zur Verschiebung der Gegenstands benutzt. Die Auswahl, ob ein Gegenstand aussortiert werden soll, erfolgt daher nicht mittels einer Weiche, sondern dadurch, daß dem Gegenstand ein ausgewählter Schieber einzeln zugeordnet wird. Der Antrieb der Schieber wird z. B. nach Art eines Linearmotors vorgenommen.

Ein Vorteil der zuletzt genannten Vorrichtung besteht darin, daß sie mit vergleichweise einfachen Mitteln realisiert werden kann und daher wenig störanfällig ist. Ein Nachteil ist jedoch, daß der gesamte Ablenkabschnitt linear ausgebildet und schräg zur Bewegungsbahn der Gegenstände angeordnet ist, so daß bei kurzer Ausbildung der Vorrichtung die Beschleunigung und Abbremsung der Behälter in Querrichtung sehr schnell erfolgen, was die Gefahr des Umkippens der Behälter vergrößert. Eine allmähliche Beschleunigung und Abbremsung der Schieber im Sinne der oben erläuterten Vorrichtung der zweiten Art ist in einer Vorrichtung der dritten Art bei Anwendung üblicher Führungsbahnen nicht möglich. Soll ein Umwerfen der Gegenstände sicher vermieden werden, muß daher der Winkel, den der Ablenkabschnitt mit der Bewegungsbahn bildet, sehr klein gewählt werden, was dann zu unerwünscht großen Baulängen führt.

Die Erfindung bezweckt, dieses Problem der Vorrichtungen der dritten Art dadurch zu vermeiden, daß das Umwerfen von abzulenkenden Gegenständen ohne wesentliche Vergrößerung des konstruktiven Aufwands auch bei Anwendung kurzer Baulängen sicher vermieden wird.

Zur Lösung dieses Problems dienen die kennzeichnenden Merkmale des Anspruchs 1.

Erfmdungsgemäß können die Schieber wie bei den Vorrichtungen der dritten Art mittels eines Linearmotors od. dgl. ausgewählt und angetrieben sowie als Ganzes längs einer Führungsbahn bewegt werden, die ein "weiches" Querbeschleunigen bzw. Abbremsen der Gegenstände am Anfang bzw. am Ende eines Ablenkabschnitts ermöglicht. Dies wird dadurch erreicht, daß die Ausrichtung der Schieber relativ zur Bewegungsbahn zumindest während des Ablenkvorgangs trotz einer entsprechenden Krümmung des Ablenkabschnitts im wesentlichen konstant gehalten wird, so daß sich die Wirkrichtung der Schiebekörper innerhalb des Ablenkabschnitts, wie dies bei Anwendung üblicher Führungsbahnen der Fall wäre, nicht ändert. Zusätzliche Führungskörper, in denen die Schieber ihrerseits verschiebbar gelagert sind, sind dabei nicht erforderlich.

Bei einer bevorzugten Weiterbildung der Erfindung ist der Rückführabschnitt für die Schieber oberhalb- oder unterhalb des Ablenkabschnitts angeordnet. Dadurch werden zwei weitere Nachteile der oben erläuterten Vorrichtung der dritten Art vermieden, nämlich daß sich wegen der in derselben Ebene wie die Ablenkung erfolgenden Rückführung der Schieber einerseits eine vergleichsweise große Bautiefe der Vorrichtung ergibt, andererseits die Schieber beim Verlassen des Ablenkabschnitts einen ungestörten Transport der nicht fehlerhaften Gegenstände behindern, außer wenn zwischen den einzelnen Gegenständen unrealistisch große Abstände vorgesehen werden.

Weitere vorteilhafte Merkmale der Erfindung ergeben sich aus den Unteransprüchen.

Die Erfindung wird nachfolgend an Ausführungsbeispielen näher erläutert, die in den beiliegenden Zeichnungen in unterschiedlichen Maßstäben dargestellt sind. Es zeigen:
Fig. 1 in einer perspektivischen Vorderansicht die für die Erfindung wesentlichen Teile einer Vorrichtung zum Ablenken von Gegenständen von einer Bewegungsbahn;
Fig. 2 eine der Fig. 1 entsprechende Ansicht, jedoch mit zusätzlichen Antriebsmotoren und unter Weglassung der Bewegungsbahn;
Fig. 3 eine schematische Hinteransicht einer endlosen, zur Führung von Schiebern bestimmten Führungsbahn der Vorrichtung nach Fig. 1 und 2;
Fig. 3a eine Einzelheit der Fig. 3 in einer schematischen Draufsicht;
Fig. 4 einen Querschnitt durch einen für die Erfindung wesentlichen Teil der Vorrichtung etwa längs der Linie IV - IV der Fig. 2;
Fig. 5 eine Draufsicht auf einen Teil der Führungsbahn der Vorrichtung nach Fig. 1 und 2;
Fig. 5a einen vergrößteren Ausschnitt eines zweiten Ausführungsbeispiels der Führungsbahn in einer der Fig. 5 entsprechenden Ansicht;
Fig. 6 und 7 Einzelheiten der Führungsbahn und der Schieber in einem gegenüber Fig. 5 vergrößerten Maßstab;
Fig. 8 eine perspektivische Ansicht von hinten auf ein der Führungsbahn nach Fig. 3 zugeordnetes Mitnehmerrad;
Fig. 9 eine der Fig. 3 entsprechende Hinteransicht einer alternativen Ausführungsform von der Führungsbahn zugeordneten Mitnehmerelementen; und
Fig. 10 ein Mitnehmerelement für die Führungsbahn gemäß einer weiteren Ausführungsform der Erfindung.

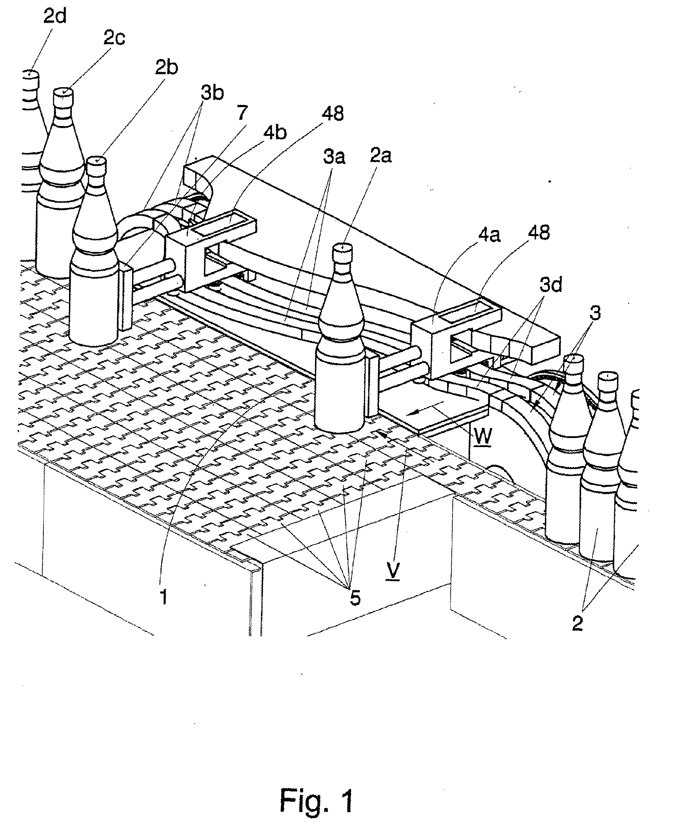

Fig. 1 zeigt eine übliche Bewegungsbahn 1 für Gegenstände 2, die hier als Flaschen dargestellt sind. Dabei sind in Fig. 1 zur Verbesserung der Übersichtlichkeit nicht alle Gegenstände 2, die normalerweise auf der Bewegungsbahn direkt hintereinander herlaufen, dargestellt, um den Blick auf eine Führungsbahn 3 und von dieser geführte Schieber 4 freizugeben. Die vorzugsweise gerade Bewegungsbahn 1 besteht z. B. aus einem Transportband, das mit einem nicht dargestellten Motor umlaufend angetrieben und in Richtung eines Pfeils v bewegt wird. Fehlerhafte, hier beispielsweise mit den Bezugszeichen 2a, 2b bezeichnete Gegenstände sind z. B. nicht ordnungsgemäß gefüllte Flaschen. Sie werden daher mit den Schiebern 4 in einer quer zur Bewegungsbahn 1 verlaufenden Richtung (Pfeil w) abgelenkt und z. B. auf eine zweite Bewegungsbahn 5 geschoben, die durch wenigstens ein weiteres Transportband gebildet sein kann, das mit derselben Transportgeschwindigkeit und in derselben Richtung wie das die Bewegungsbahn 1 bildende Transportband angetrieben ist und unmittelbar neben dieser liegt. Nicht fehlerhafte Gegenstände, z. B. 2c und 2d, werden dagegen auf der Bewegungsbahn 1 belassen und einer weiteren Bearbeitungsstation zugeführt. Außerdem zeigt Fig. 1, daß sich ein Schieber 4a gerade am Anfang eines Ablenkabschnitts 3a der Führungsbahn 3 gefindet, so daß der zugehörige Gegenstand 2a noch sehr wenig abgelenkt ist, während ein Schieber 4b gerade das Ende des Ablenkabschnitts 3a erreicht hat und infolgedessen der zugehörige Gegenstand 2b bereits völlig von der Bewegungsbahn 1 auf die Bewegungsbahn 5 geschoben worden ist. Erreicht wird dies dadurch, daß der Ablenkabschnitt 3a auf die Bewegungsbahn 1 zuläuft und die Schieber 4, wie weiter unten erläutert ist, immer mehr in Richtung des Pfeils w verschiebt bzw. ablenkt.

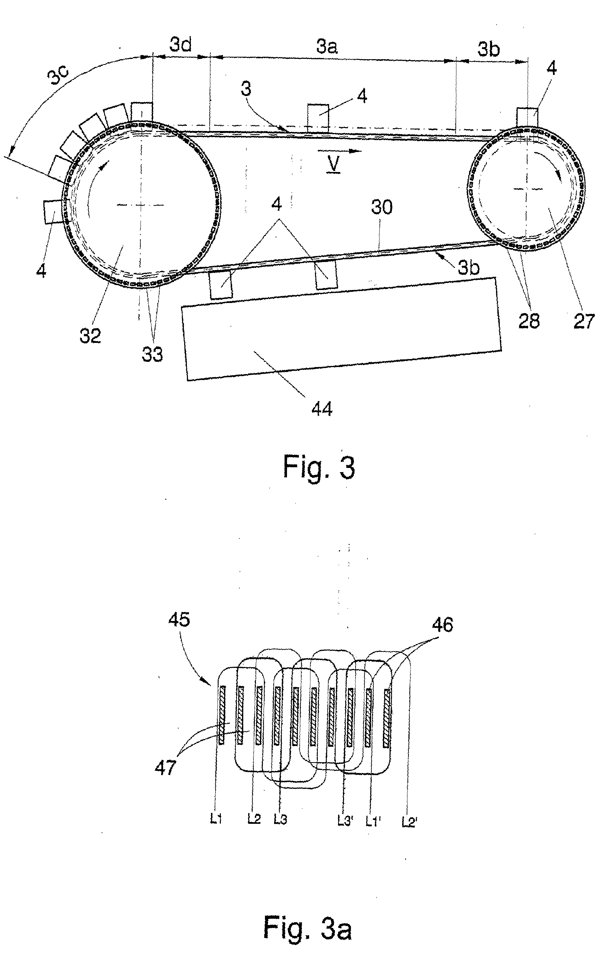

Wie insbesondere Fig. 3 zeigt, werden die Schieber 4 nach dem Durchlaufen des Ablenkabschnitts 3a in einen Rückführabschnitt 3b befördert und aus diesem in einen nur schematisch dargestellten Sammelabschnitt 3c überführt, in dem die Schieber 4 auch zum Stillstand kommen können. Zwischen dem Sammelabschnitt 3c und dem Anfang des Ablenkabschnitts 3a befindet sich noch ein Beschleunigungsabschnitt 3d, innerhalb von dem die im Sammelabschnitt 3c befindlichen Schieber bei Bedarf auf die Transportgeschwindigkeit beschleunigt werden, mit der die Gegenstände 2 auf der Bewegungsbahn 1 transportiert werden. Dabei ist die Anordnung so getroffen, daß die verschiedenen Schieber 4 einzeln, unabhängig voneinander und derart auf der von den Abschnitten 3a bis 3d gebildeten Führungsbahn 3 bewegt werden können, daß sich stets wenigstens ein Schieber 4 im Sammelabschnitt 3c befindet, um diesen Schieber 4 bei Bedarf, d. h. beim Erscheinen eines fehlerhaften Gegenstands 2, längs des Beschleunigungsabschnitts 3d beschleunigen und positionskorreliert bzw. positionsgenau an den betreffenden Gegenstand 2 heranführen zu können, damit dieser im weiteren Verlauf seitlich von der Bewegungsbahn 1 entfernt wird.

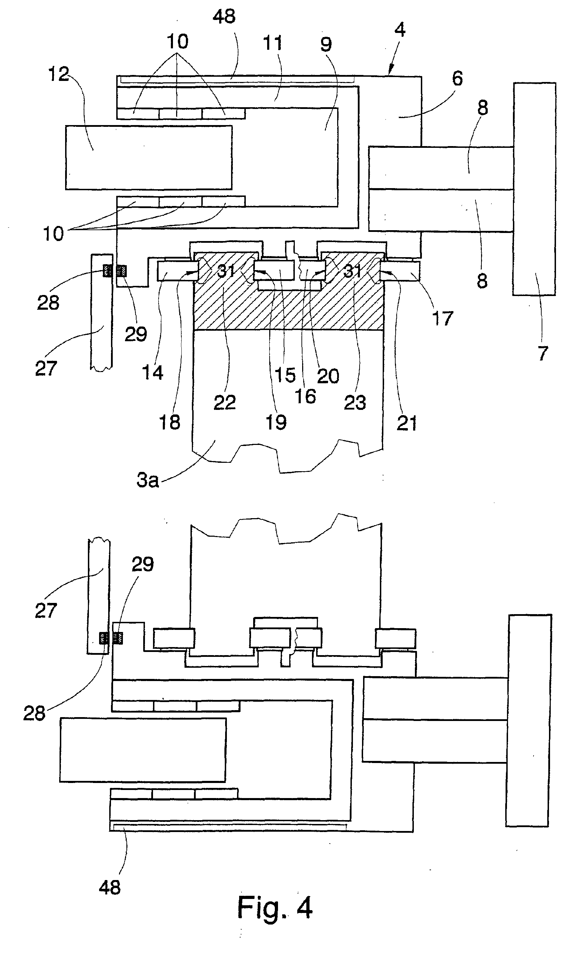

Wie insbesondere Fig. 4 zeigt, enthält jeder Schieber 4 einen U-förmigen, nach hinten offenen Schieberkörper 6 und ein an dessen Vorderseite angeordnetes Ablenkelement 7, das mit Stangen 8, Rohren od. dgl. am Schieberkörper 6 befestigt ist. Die Vorderseite des Ablenkelements 7 kann eine leicht konkav gewölbte oder sonstwie an die Kontur der jeweiligen Gegenstände 2 angepaßte Form und Größe aufweisen. Auf einander zugewandten Seiten einer U-förmigen Ausnehmung ist der Schieberkörper 6 mit Permanentmagneten 10 versehen, die durch einen U-förmigen Weicheisenring 11 verbunden sind, der einen magnetischen Rückschluß bewirkt. Zwischen diesen Permanentmagneten 10 ist in Nebeneinanderanordnung und in Transportrichtung eine Vielzahl von nicht näher dargestellten Elektromagneten 12 vorgesehen, die mit den Permanentmagneten 10 einen Linearmotor bilden. Dabei sind zumindest einige dieser Elektromagneten 12 auch im Beschleunigungsabschnitt 3d angeordnet, um die Schieber bei Bedarf auf eine Geschwindigkeit zu beschleunigen, die genau der Transportgeschwindigkeit der Gegenstände entspricht, während andere Elektromagnete 14 dem Zweck dienen, die Schieber 4 innerhalb des Ablenkabschnitts 3a in Richtung des Pfeils v mit einer konstanten, der Transportgeschwindigkeit entsprechenden Geschwindigkeit zu bewegen.

Vorrichtungen dieser Art sind im Prinzip bekannt (z.B. DE 31 30 308 A1) und brauchen dem Fachmann daher nicht näher erläutert werden.

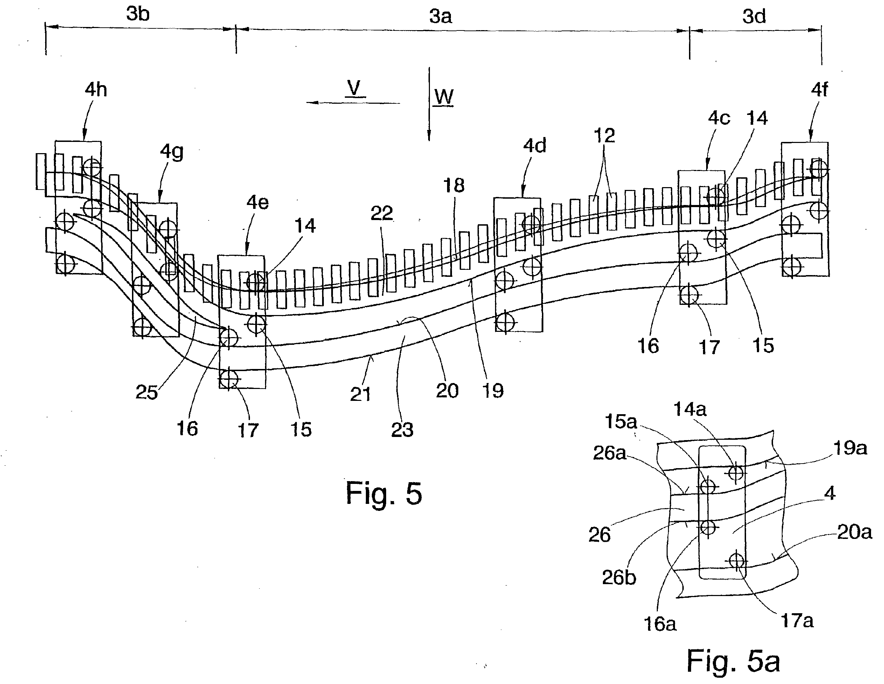

Einzelheiten der erfindungsgemäßen Führungsbahn 3 lassen sich insbesondere den Fig. 4 bis 7 entnehmen. Danach besitzt ihr Ablenkabschnitt 3a eine solche Kontur, daß die von diesem geführten Schieber 4 - in Richtung des Pfeils v betrachtet - am Anfang des Ablenkabschnitts 3a nur allmählich in Richtung des Pfeil w, d. h. quer zur Bewegungsbahn 1 ausgelenkt werden, wie dies z. B. für den Schieber 4c in Fig. 5 gilt. In einem mittleren Bereich des Ablenkabschnitts 3a (z.B. Schieber 4d) verläuft seine Kontur dagegen vergleichsweise steil und unter einem Winkel von z.B. 45° zur Bewegungsbahn 1, um die fehlerhaften Gegenstände 2 vergleichsweise schnell in Richtung des Pfeils w zu bewegen. Am Ende des Ablenkabschnitts 2a werden die Schieber 4 schließlich in Richtung des Pfeils w allmählich abgebremst (z. B. Schieber 4e in Fig. 5), um dadurch die von ihnen verschobenen Gegenstände 2 langsam in Querrichtung abzubremsen. Dabei ist die Anordnung vorzugsweise so, daß in Anbetracht der Reibungsverhältnisse und Gegenstandsparameter einerseits ein Umwerfen der Gegenstände 2 aufgrund zu großer Querbeschleunigungen verhindert, andererseits im Mittelteil des Ablenkabschnitts 3a eine möglichst große Ablenkgeschwindigkeit in Richtung des Pfeils w erzielt wird, um die in Richtung des Pfeils v gemessene Länge des Ablenkabschnitts 3a möglichst kurz halten zu können.

Innerhalb des Beschleunigungsabschnitts 3d werden die Schieber 4 einerseits auf die Transportgeschwindigkeit der Gegenstände 2 beschleunigt. Andererseits können die Schieber 4 bereits etwas in Richtung des Pfeils w vorgeschoben werden, um ihre Ablenkelemente 7 (Fig. 4) an die Tangentenebene der auf der Bewegungsbahn 1 transportierten Gegenstände heranzuführen und am Anfang des Ablenkabschnitts 3a ein hartes Aufprallen der Ablenkelemente 3a auf die Gegenstände 2 zu vermeiden. Dies ist in Fig. 5 durch den Übergang eines Schiebers 4f angedeutet, der am Beginn des Beschleunigungsabschnitts 3d dargestellt ist und nach Beendigung des Beschleunigungsvorgangs denjenigen Platz am Ende des Beschleunigungsabschnitts einnehmen würde, den in Fig. 5 der Schieber 4c einnimmt.

Am Ende des Ablenkabschnitts 3a beginnt der Rückführabschnitt 3b, längs dessen die Schieber 4 (z. B. 4g) zunächst entgegen der Richtung des Pfeils w vergleichsweise schnell auf eine Ebene zurückgezogen werden (z. B. 4h), die sie auch beim Einlauf in den Sammelabschnitt 3c und den Beschleunigungsabschnitt 3d einnehmen, bevor die eigentliche Rückführung zum Sammelabschnitt 3c beginnt.

Nach einem besonderen Merkmal der Erfindung sind die Führungsbahn 3 und die Schieber 4 mit Mitteln versehen, mittels derer zumindest innerhalb des Ablenkabschnitts 3a die Ausrichtung der Schieber 4 relativ zur Bewegungsbahn 1 im wesentlichen konstant gehalten wird. Dies zeigt insbesondere Fig. 5, wonach die in der Draufsicht rechteckig dargestellten Schieber 4 mit ihren Schmalseiten durchgehend parallel zum Pfeil v mit ihren Längsseiten durchgehend parallel zum dazu senkrechten Pfeil w angeordnet sind, so daß auch die zwischen den Schiebern 4c und 4e bewirkte Verschiebung immer in Richtung des Pfeils w erfolgt bzw. die Ablenkelemente 7 der Schieber 4 dieselbe relative Lage zum zugehörigen, abzulenkenden Gegenstand 2 beibehalten. Dieselbe Ausrichtung der Schieber 4 wird vorzugsweise auch im Sammelabschnitt 3c, im Beschleunigungsabschnitt 3d und im dem aus Fig. 5 ersichtlichen Teil des Rückführabschnitts 3b, d. h. überall dort aufrechterhalten, wo die Schieber 4 bzw. deren Ablenkelemente 7 noch im Wirkungsbereich der Gegenstände 2 sind. Dadurch wird trotz der ganz unterschiedlichen Krümmungen und Steigungen der Führungsbahn 3 sicher vermieden, daß die Bewegung von nicht fehlerhaften, dicht hintereinander herlaufenden Gegenständen (z. B. 2c, 2d in Fig. 1) durch nicht in Richtung des Pfeils w erfolgende Schwenkbewegungen der Ablenkelemente 7 behindert wird oder die Behälter gar umgeworfen werden.

Die Mittel zum Konstanthalten der Ausrichtung der Schieber 4 enthalten nach Fig. 4 bis 7 an den Schiebern 4 angebrachte Führungselemente 14 bis 17, vorzugsweise in Form von drehbar gelagerten Rollen, und mit diesen zusammenwirkende, seitliche Führungsflächen 18 bis 21 an der Führungsbahn 3. Dabei ist die Anordnung entsprechend Fig. 4 und 5 vorzugsweise derart, daß die Führungsflächen 18 bis 21 in der Gebrauchsstellung der Vorrichtung im wesentlichen vertikal angeordnet sind und die Führungselemente 14 bis 17 aus an diesen Führungsflächen 18 bis 21 abrollenden, vertikale Drehachsen aufweisenden Rollen bestehen.

Bei einer bevorzugten Ausführungsform der Erfindung weist der Ablenkabschnitt 3a im oberen, den Führungselementen 14 bis 17 zugeordneten Bereich zwei quer zur Bewegungsbahn 1 beabstandete Segmente 22 und 23 auf, die seitlich mit den vertikalen Führungsflächen 18,19 bzw. 20,21 versehen sind. Dabei ist ein Paar 14,15 der Führungselemente dem Segment 22 und ein anderes Paar 16,17 der Führungselemente dem Segment 23 derart zugeordnet, daß das Segment 22 zwischen den Führungselementen 14,15 liegt und diese an den Führungsflächen 18,19 abrollen, während das Segment 23 zwischen dem Führungselementen 16,17 liegt und diese an den Führungsflächen 20,21 abrollen. Die Führungsflächen 18 bis 21 liegen dabei an jedem Ort des Ablenkabschnitts 3a als Tangentenflächen am zugehörigen Führungselement 14 bis 17 an. Dadurch ist sichergestellt, daß die Schieber 4 an keiner Stelle des Ablenkabschnitts 3a um eine senkrecht zu den Pfeilen v und w stehende Achse gedreht bzw. in ihrer Ausrichtung verändert werden können. Ihre Ausrichtung relativ zur Bewegungsbahn 1 bleibt daher stets dieselbe.

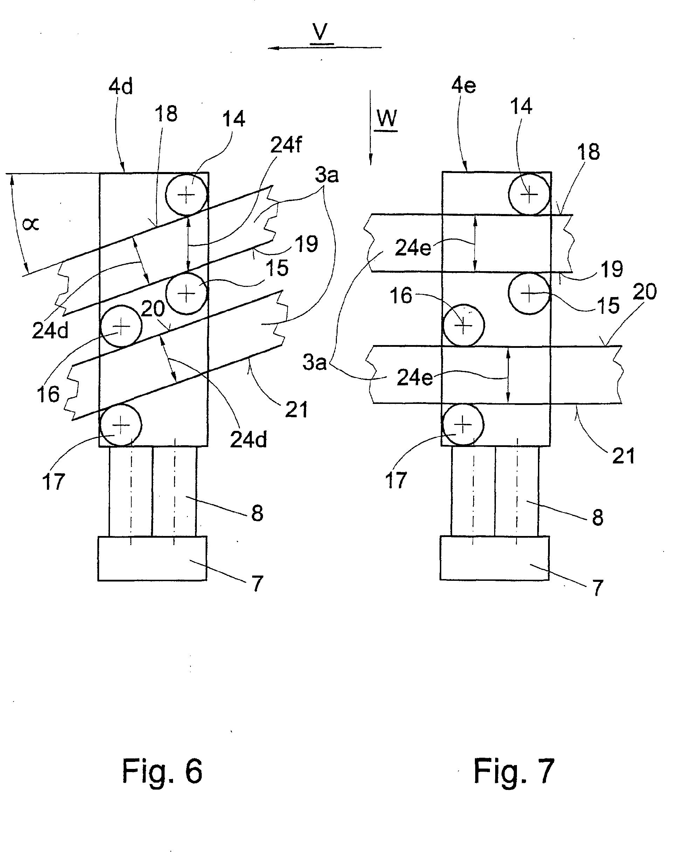

Wie insbesondere Fig. 5 zeigt, kann die äußere Kontur der Führungsflächen 18 bis 21 dadurch erhalten werden, daß im Ablenkabschnitt 3a eine Vielzahl von Schiebern 4 in dichter Reihenfolge und mit einer der gewünschten Ablenkung in Richtung des Pfeils w entsprechenden Anordnung nebeneinander gelegt wird. Werden dann z. B. die sich zwangsläufig ergebenden Tangentenpunkte aller Führungselemente 14 miteinander verbunden, ergibt sich die Führungsfläche 18. Entsprechend können die Tangentenpunkte der anderen Führungselemente 15 bis 17 zur Bildung der Führungsflächen 19 bis 21 verwendet werden. Wie insbesondere Fig. 5 bis 7 zeigen, hat das zur Folge, daß die in Fig. 6 und 7 als Maß 24d bzw. 24e bezeichnete Dicke der Segmente 22,23 bzw. der senkrechte Abstand ihrer Führungsflächen in Abhängigkeit von dem jeweiligen Ablenkwinkel (z. B. α in Fig. 6) schwankt. Bei Führung eines Schiebers (z. B. 4d in Fig. 5 und 6) auf einem vergleichsweise steilen Stück des Ablenkabschnitts 3a beträgt die Dicke (Maß 24d) deutlich weniger als für den Fall (z. B. Maß 24e), daß ein Schieber 4 (z. B. 4e in Fig. 5 und 7) längs eines Stücks des Ablenkabschnitts 3a geführt wird, das parallel zum Pfeil v verläuft. Dennoch ist im Beispiel nach Fig. 6 und 7 ein Maß 24f der Segmente 22 bzw. 23, das ihrer, in der gewünschten Erstreckungsrichtung der Schieber 4 gemessenen Dicke entspricht, an allen Orten längs des Ablenkabschnitts 3a gleich dem in dieser Richtung gemessenen Abstand der Paare 14,15 bzw. 16,17 der Führungselemente.

Wichtig für die Zwecke der Erfindung ist, daß die Führungselemente 14 bis 17 möglichst im gesamenten Ablenkabschnitt 3a so an zugeordneten Führungsflächen 18 bis 21 anliegen, daß ihre Ausrichtung zur Bewegungsbahn 1 der Gegenstände 2 im wesentlichen konstant bleibt. Wie dies erreicht wird, ist im Prinzip gleichgültig, sofern sich der aus Fig. 5 bis 7 ersichtliche Vorteil ergibt, daß außer den Schiebern 4 und dem Ablenkabschnitt 3a keine weiteren Bauteile benötigt werden und die beschriebene Vorrichtung daher insgesamt äußerst robust und betriebssicher ist.

Abweichend von Fig. 4 bis 7 ist es im Rahmen der Erfindung möglich, die beiden in Richtung des Pfeils v relativ zueinander versetzten Paare 14,15 bzw. 16,17 von Führungselementen auf einer zum Pfeil w parallelen Linie hintereinander anzuordnen, die Abstände der beiden Führungselemente 14,15 des einen Paars anders als die des anderen Paars 16,17 zu wählen und/oder die beiden Führungselemente 14,15 bzw. 16,17 eines jeden Paars in Ri2chtung des Pfeils v zu versetzen. Die daraus resultierenden Führungsflächen 18 bis 21 würden dann eine entsprechend veränderte Kontur erhalten.

Um auch in sehr steilen Bereichen der Führungsbahn die Ausrichtung der Schieber 4 aufrechterhalten zu können, ist es möglich, wenigstens ein drittes Segment 25 (Fig. 5) mit seitlichen Führungsflächen vorzusehen, an die sich die mit Abstand gegenüberliegenden Führungselemente 15 und 16 eines Schiebers 4 anlegen können. Das ist in Fig. 5 beispielhaft für denjenigen Bereich des Rückführabschnitts 3b dargestellt, längs dessen die Schieber 4 (z. B. 4g) abrupt zurückgezogen werden.

Ein weiteres Ausführungsbeispiel für den Ablenkabschnitt 3a ergibt sich aus Fig. 5a. Hier ist zwischen den Segmenten 22, 23 entsprechenden Segmenten 22a, 23a durchgehend ein drittes Segment 26 mit Führungsflächen 26a, 26b angeordnet. Dabei wirkt die Führungsfläche 26a mit einer ihr gegenüberstehenden, der Führungsfläche 19 nach Fig. 5 entsprechenden Führungsfläche 19a und die Führungsfläche 26b mit einer ihr gegenüberstehenden, der Führungsfläche 20 nach Fig. 5 entsprechenden Führungsfläche 20a zusammen. Die Schieber 4 weisen in diesem Fall zwei Paare von Führungselementen 14a, 15a bzw. 16a, 17a auf, die in jedem Paar in Richtung des Pfeils v (Fig. 5) gegeneinander versetzt angeordnet sind. Analog zu Fig. 5 bis 7 wirken die Führungselemente 14a, 15a, bzw. 26a, 17a so mit den ihnen zugeordneten Führungsflächen 19a, 26a bzw. 26b, 20a zusammen, daß die Ausrichtung der Schieber 4 zumindest innerhalb des Ablenkabschnitts 3a im wesentlichen konstant bleibt.

Der aus den Elektromagneten 12 und den Permanentmagneten 10 gebildete Linearmotor (Fig. 4) muß den unterschiedlich gekrümmten Verläufen der Führungsbahn 3 im Bereich des Beschleunigungsabschnitts 3d, des Ablenkabschnitts 3a und des Rückführabschnitts 3b Rechnung tragen. Dies erfolgt am einfachsten dadurch, daß die Elektromagnete 12 entsprechend Fig. 5 längs einer Bahn verlegt werden, die genau der Bahn entspricht, die die Permanentmagnete 10 bei der Bewegung der Schieber 4 längs der Führungsbahn 3 beschreiben.

Der Linearmotor ist aus Kostengründen vorzugsweise nur über den Beschleunigungsabschnitt 3d, den Ablenkabschnitt 3a und den aus Fig. 5 ersichtlichen Teil des Rückführabschnitts 3b erstreckt. Dagegen erfolgt der größte Teil der Rückführung der Schieber 4 zum Sammelabschnitt 3c vorzugsweise mit anderen, preisgünstigeren Mitteln und zweckmäßig stets oberhalb oder unterhalb des Ablenkabschnitts 3a.

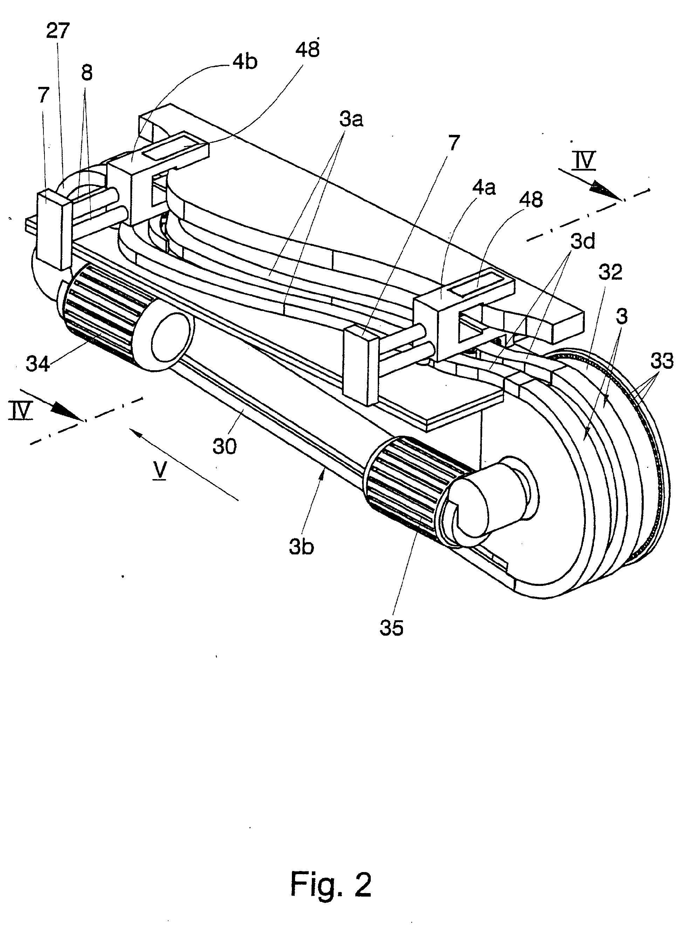

Eine erste Variante für die Rückführung der Schieber 4 ist insbesondere in Fig. 2 bis 4 und 8 gezeigt. Der Linearmotor endet hier am Ende des in Fig. 5 gezeigten Teils des Rückführabschnitts 3b, d. h. nach dem Zurückziehen aller Schieber 4 in eine gemeinsame Rückführebene. An dieser Stelle werden die Schieber 4 von einem auf der Rückseite der Rückführebene angeordneten Mitnehmerelement übernommen, das hier als drehbares Mitnehmerrad 27 ausgebildet ist, das an einer radial außen liegenden, den Schiebern 4 zugewandten Stirnfläche mit in Umfangsrichtung verteilt angeordneten Permanentmagneten 28 versehen ist. Diesen sind Permanentmagnete 29 zugeordnet, die in der hinteren Stirnfläche der Schieberkörper 6 vorgesehen und in derselben Höhe wie die Permanentmagnete 28 angeordnet sind. Ist das Mitnehmerrad 27 daher in der aus Fig. 3 ersichtlichen Weise unmittelbar am Ende des Linearmotors angeordnet, dann bilden die Magnetpaare 28,29 bei entsprechender Polung eine magnetische Kupplung mit der Folge, daß die dort ankommenden Schieber 4 bei Drehung des Mitnehmerrades 27 von diesem mitgenommen werden. Dabei ist die Anordnung vorzugsweise so, daß das eine horizontale Drehachse aufweisende Mitnehmerrad 27 mit seinem höchsten Punkt am Ende des Linearmotors angeordnet ist (Fig. 3) und sein Umfang eine kontinuierliche Fortsetzung der Transportbahn der Schieber 4 längs eines nach unten führenden 180°-Bogens darstellt. Entsprechend ist der Rückführabschnitt 3b der Führungsbahn 3 in diesem Bereich so ausgebildet, daß die Permanentmagnete 29 der von ihm geführten Schieber 4 mit den Permanentmagneten 28 des Mitnehmerrades 27 gekoppelt bleiben, bis dessen in Fig. 3 unteres Ende erreicht ist. Das Mitnehmerrad 27 braucht immer nur dann in Umdrehung versetzt werden, wenn ein Schieber 4 in seinen Wirkungsbereich gelangt, was durch geeignete Sensoren überwacht werden kann.

An das untere Ende des Mitnehmerrades 27 schließt sich vorzugsweise ein Teil des Rückführabschnitts 3b an, der gemäß Fig. 3 längs einer schiefen Ebene 30 verläuft, so daß die vom Mitnehmerrad 27 zugeführten Schieber durch die Schwerkraft weiterrollen oder -gleiten können. Um zu vermeiden, daß die Schieber 4 dabei wie auch bei der Mitnahme durch das Mitnehmerrad 27 von der Führungsbahn 3 abfallen, sind die Führungsflächen 18 bis 21 zweckmäßig mit Führungsnuten 31 (Fig. 4) versehen, in denen die Führungselemente 14 bis 17 derart versenkt angeordnet sind, daß sie sowohl parallel zum Pfeil w als auch senkrecht zur Zeichenebene der Fig. 5 formschlüssig mit der Führungsbahn 3 gekoppelt sind. Das ermöglicht auch eine Anordnung der Schieber 4 derart, daß die Schieberkörper 6 oberhalb der Führungsbahn 3 zu liegen kommen, nur die Führungselemente 14 bis 17 mit der Führungsbahn 3 in Berührung sind (Fig. 4) und sich günstige Reibungsverhältnisse ergeben.

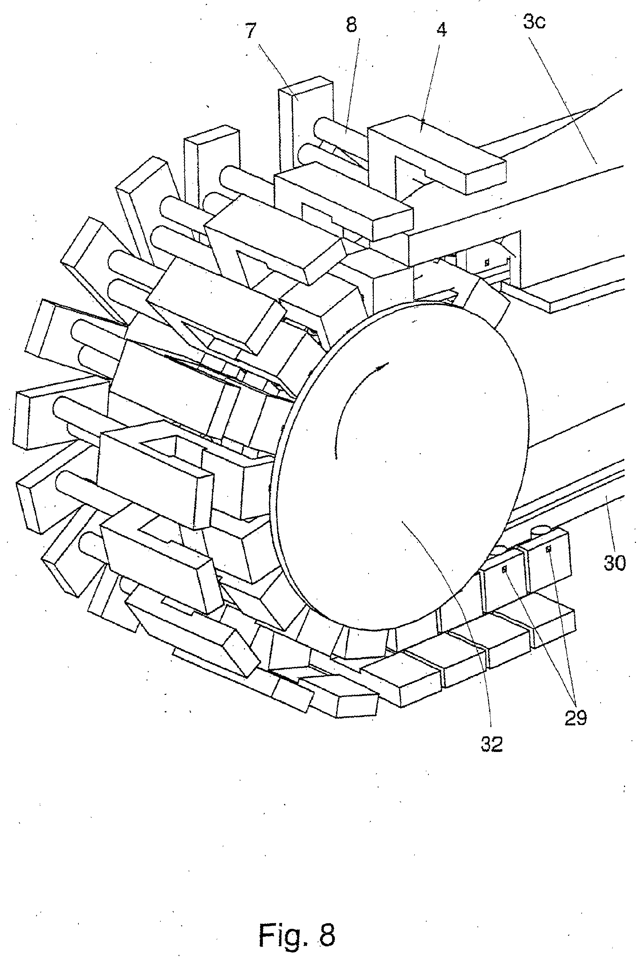

Am Anfang des Sammelabschnitts 3c (Fig. 3 und 8) ist zweckmäßig ein dem Mitnehmerrad 27 entsprechendes Mitnehmerrad 32 angeordnet, an dessen tiefstem Punkt die schiefe Ebene 30 endet und dessen Durchmesser daher entsprechend größer als der des Mitnehmerrades 27 ist. Das Mitnehmerrad 32 weist am Rand wiederum Permanentmagnete 33 (Fig. 3) auf, die mit den Permanentmagneten 29 der Schieber 4 zusammenwirken und diese längs eines entsprechend geformten Teils des Rückführabschnitts 3b vom unteren Trum der Führungsbahn 3 wieder auf deren oberes Trum befördern und dem Sammelabschnitt 3c bzw. später dem Beschleunigungsabschnitt zuführen, wo ihrer weiterer Transport vom Linearmotor übernommen wird. Dabei wird das Mitnehmerrad 32 vorzugsweise so gesteuert, daß es zum Stillstand kommt, sobald ein Schieber 4 entsprechend Fig. 3 am Anfang des Beschleunigungsabschnittes steht. Wird dieser Schieber 4 dann im Beschleunigungsabschnitt 3d beschleunigt, wird das Mitnehmerrad 32 so lange in Umdrehungen versetzt, bis sich der nächste Schieber 4 am Anfang des Beschleunigungsabschnitts befindet. Auch diese Vorgänge können mit geeigneten Sensoren überwacht werden.

Der Antrieb der Mitnehmerräder 27,32 kann mit Hilfe von aus Fig. 2 ersichtlichen, unterhalb der Bewegungsbahn 1 angeordneten Elektromotoren 34, 35 und mit Transportgeschwindigkeiten erfolgen, die anders als die Transportgeschwindigkeit des Linearmotors und insbesondere wesentlich größer als diese sind. Dadurch werden die Schieber 4 schnell wieder zum Sammelabschnitt 3c zurückbefördert, so daß nur wenige Schieber 4 mehr benötigt werden, als der Zahl der Gegenstände 2 entspricht, die maximal auf dem zwischen den beiden Mitnehmerrädern 27,32 befindlichen Teil der Bewegungsbahn 1 angeordnet sein können.

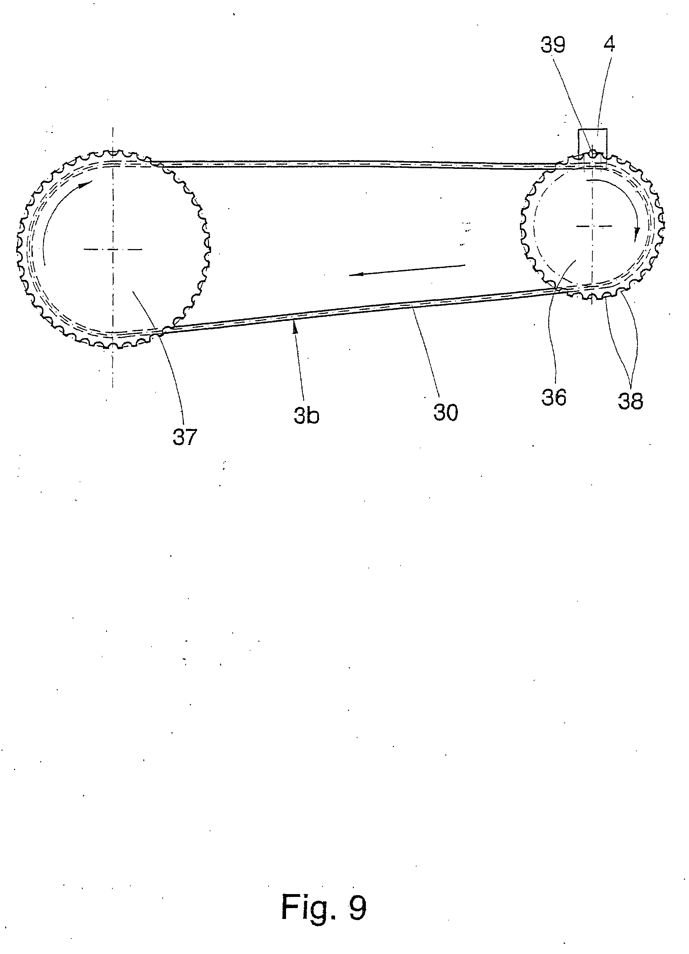

Die Kupplung der Schieber 4 an die Mitnehmerräder 27,32 kann auch mit mechanischen anstatt mit magnetischen Kräften erfolgen. Fig. 9 zeigt z. B. eine Ausführungsform, bei der sowohl ein die Schieber 4 auf die schiefe Ebene 30 beförderndes Mitnehmerrad 36 als auch ein die Schieber 4 vom Ende der schiefen Ebene 30 zum Sammelabschnitt 3c befördernden Mitnehmerrad 37 auf der äußeren Mantelfäche Ausnehmungen 38 nach Art von Zahnrädern aufweist, in die an den Schiebern 4 befestigte, seitlich abstehende Zapfen 39 eintreten können, wodurch sich eine formschlüssige Kupplung ergibt.

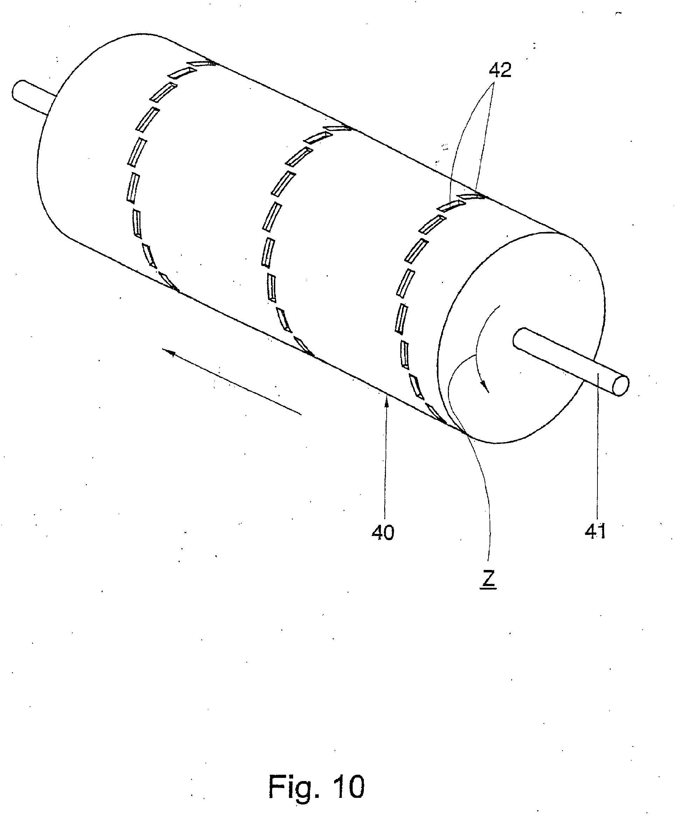

Anstelle der schiefen Ebene 30 kann ein Transportmittel vorgesehen sein, daß die Schieber 4 anders als durch Schwerkraft zwangsweise transportiert. Dieses Transportmittel enthält z. B. ein Mitnehmerelement in Form einer Walze 40 (Fig. 10) mit horizontal angeordneter Welle 41. Die Walze 40 kann analog zu Fig. 3 zwischen zwei im Durchmesser gleich großen Mitnehmerrädern derart angeordnet sein, daß ihre axialen Enden unmittelbar den tiefsten Punkten dieser Mitnehmerräder gegenüberliegen. Die Walze 14 ist auf ihrer Mantelfäche mit spiralförmig angeordneten Permanentmagneten 42 oder einer spiralförmig verlaufenden Magnetisierung derart versehen, daß die Magnete 42 bzw. die Magnetisierung mit den Permanentmagneten 29 der Schieber 4 wechselwirken können. Wird die Walze 40 daher in Richtung eines Pfeils z (Fig. 10) gedreht, dann kuppeln sich die Permanentmagnete 29 der einlaufenden Schieber 4 durch Magnetkraft an die Walze 40 an, so daß sie allmählich in Richtung der Welle 41 von dem einen zum anderen Mitnehmerrad wandern.

Um sicherzustellen, daß die Schieber 4 bei Anwendung allein der schiefen Ebene 30 schnell genug vom Mitnehmerrad 27, 36 zum Mitnehmerrad 36, 38 gelangen und auch bei hohen Arbeitsgeschwindigkeiten im Bereich des Sammelabschnitts 3c keine Lücken zwischen den einzelnen Schiebern 4 entstehen, ist erfmdungsgemäß weiter vorgesehen, dem Rückführabschnitt 3b eine Beschleunigungsvorrichtung 44 (Fig. 3) zuzuordnen. Diese enthält vorzugsweise einen Asynchron-Linearmotor, der entsprechend Fig. 3a ein kammförmig gestaltetes Blechpaket 45 mit einer Vielzahl von in Transportrichtung der Schieber 4 abwechselnd hintereinander angeordneten Zähnen 46 und Nuten 47 aufweist. In die Nuten 47 sind in an sich bekannter Weise drei mit Drehstrom gespeiste Stränge L1, L1' bzw. L2, L2' bzw. L3, L3' einer Wicklung gelegt, durch die ein in Bewegungsrichtung der Schieber 4 fortschreitendes elektromagnetisches Wanderfeld erzeugt werden kann. Das Blechpaket 45 ist dabei so angeordnet, daß es mit nach oben weisenden Zähnen 46 dicht unterhalb des Rückführabschnitts 36 angeordnet ist. Die Schieber 4 sind an ihren Oberseiten mit je einer aus elektrisch leitendem Material, z. B. Aluminium, bestehenden Rückschlußschiene 48 versehen (Fig. 1, 2, 4), die nach der Umlenkung der Schieber 4 durch das Mitnehmerrad 27, 36 nach unten weisen und dort dem Blechpaket 46 der Beschleunigungsvorrichtung 44 dicht gegenüberstehen. Sobald die Schieber 4 daher am unteren Ende des Mitnehmerrades 27, 36 in den Wirkungsbereich der Beschleunigungsvorrichtung 44 gelangen, werden sie in Richtung des jeweils anderen Mitnehmerrades 32, 37 zusätzlich durch Magnetkraft vorgeschoben. Dabei ist die mit Hilfe des Linearmotors bzw. der Beschleunigungsvorrichtung 44 erzwungene Transportgeschwindigkeit der Schieber 4 vorzugsweise größer, als ihrer Antriebsgeschwindigkeit innerhalb des Ablenkabschnitts 3a bzw. ihrer längs der schiefen Ebene aufgrund der Schwerkraft bewirkten Geschwindigkeit entspricht. Ein weiterer Vorteil der Beschleunigungsvorrichtung 44 besteht darin, daß die Schieber 4 beim Erreichen des Mitnehmerrades 32, 37 mit einer gewissen Kraft gegen dieses gedrückt und daher beim Drehen dieses Mitnehmerrades 32, 37 sicher mitgenommen werden.

Die Erfindung ist nicht auf die beschriebenen Ausführungsbeispiele beschränkt, die auf vielfache Weise abgewandelt werden können. Dies gilt insbesondere für die dargestellten Formen der verschiedenen Abschnitte der Führungsbahn 3 und die Führungselemente 14 bis 17 der Schieber 4. Auch die Lage und die Anordnung des Linearmotors und seiner Teile könnten anders gewählt sein. Weiter ist die Erfindung nicht darauf beschränkt, daß die Schieber 4 in der aus Fig. 5 bis 7 ersichtlichen Weise relativ zur Bewegungsbahn 1 angeordnet sind. Weiter kann die Rückführung der Schieber 4 anders erfolgen, als oben beschrieben ist, wobei insbesondere auch andere Mitnehmerelemente vorgesehen sein können, um die Schiber 4 von einem oberen Trum der Führungsbahn 3 auf ein unteres Trum bzw. umgekehrt zu befördern. Schließlich versteht sich, daß die verschiedenen Merkmale auch in anderen als den dargestellten und beschriebenen Kombinationen angewendet werden können.

## Patentansprüche

1. Vorrichtung zum Ablenken von Gegenständen (2), insbesondere Behältern, von einer Bewegungsbahn (1), auf der die Gegenstände (2) mit einer Transportgeschwindigkeit transportiert werden, enthaltend: eine geschlossene Führungsbahn (3), die hintereinander einen auf die Bewegungsbahn (1) zulaufenden Ablenkabschnitt (3a), einen Rückführabschnitt (3b), einen Sammelabschnitt (3c) und einen den Sammelabschnitt (3c) mit dem Ablenkabschnitt (3a) verbindenden Beschleunigungsabschnitt (3d) aufweist, eine Mehrzahl von unabhängig voneinander auf der Führungsbahn (3) bewegbaren, im Sammelabschnitt (3c) sammelbaren Schiebern (4) und je eine Steuer- und Antriebseinrichtung, mittels derer bei Bedarf der jeweils vorderste Schieber (4) innerhalb des Beschleunigungsabschnitts (3d) auf die Transportgeschwindigkeit der Gegenstände (2) beschleunigbar und positionsgenau an einen ausgewählten Gegenstand (2) heranführbar ist, um diesen im Ablenkabschnitt (3a) seitlich von der Bewegungsbahn (1) zu entfernen, dadurch gekennzeichnet, daß die Führungsbahn (3) eine solche Kontur aufweist, daß die Schieber (4) quer zur Bewegungsbahn (1) am Anfang des Ablenkabschnitts (3a) allmählich beschleunigt und am Ende des Ablenkabschnitts (3a) allmählich abgebremst werden und daß die Führungsbahn (3) und die Schieber (4) mit Mitteln (14 bis 17 bzw. 18 bis 21) versehen sind, mittels derer die Ausrichtung der Schieber (4) relativ zur Bewegungsbahn (1) zumindest innerhalb des Ablenkabschnitts (3a) im wesentlichen konstant gehalten wird.

2. Vorrichtung nach Anspruch 1, dadurch gekennzeichnet, daß die Antriebseinrichtung ein Linearmotor ist, der eine Vielzahl von längs der Führungsbahn (3) angeordneten Elektromagneten (12) und an den Schiebern (4) angebrachte Permanentmagnete (10) enthält.

3. Vorrichtung nach Anspruch 2, dadurch gekennzeichnet, daß die Elektromagnete (12) zumindest im Bereich des Ablenkabschnitts (3a) entsprechend der von diesem vorgegebenen Bahn der Schieber (4) angeordnet sind.

4. Vorrichtung nach einem der Ansprüche 1 bis 3, dadurch gekennzeichnet, daß der Rückführabschnitt (3b) oberhalb oder unterhalb des Ablenkabschnitts (3a) angeordnet ist.

5. Vorrichtung nach einem der Ansprüche 2 bis 4, dadurch gekennzeichnet, daß der Linearmotor nur im Bereich des Sammelabschnitts (3c), des Beschleunigungsabschnitts (3d), des Ablenkabschnitts (3a) und eines Teils des Rückführabschnitts (3b) vorgesehen ist und die Antriebseinrichtung mit zur Rückführung der Schieber (4) bestimmten Mitnehmerelementen (27, 32, 36, 37, 40) versehen ist.

6. Vorrichtung nach Anspruch 5, dadurch gekennzeichnet, daß die Kupplung der Schieber (4) mit den Mitnehmerelementen (27, 32, 40) mit Magnetkraft erfolgt.

7. Vorrichtung nach Anspruch 5, dadurch gekennzeichnet, daß die Kupplung der Schieber (4) mit den Mitnehmerelementen (36, 37) durch Formschluß erfolgt.

8. Vorrichtung nach einem der Ansprüche 1 bis 7, dadurch gekennzeichnet, daß der Rückführabschnitt (3b) zumindest teilweise längs einer schiefen Ebene (30) angeordnet ist und die Rückführung der Schieber (4) in diesem Bereich durch Schwerkraft erfolgt.

9. Vorrichtung nach einem der Ansprüche 1 bis 8, dadurch gekennzeichnet, daß die Schieber (4) mit von der Führungsbahn (3) geführten Führungselementen (14 bis 17) versehen sind.

10. Vorrichtung nach Anspruch 9, dadurch gekennzeichnet, daß die Führungselemente (14 bis 17) aus drehbaren Rollen bestehen.

11. Vorrichtung nach Anspruch 9 oder 10, dadurch gekennzeichnet, daß jeder Schieber (4) zwei Paare von quer zur Führungsbahn (3) beabstandeten Führungselementen (14,15 bzw. 16,17) aufweist, zwischen denen zumindest im Ablenkabschnitt (3a) je ein mit seitlichen Führungsflächen (18,19 bzw. 20,21) versehenes Segment (22,23) der Führungsbahn (3) angeordnet ist, und daß die konstante Ausrichtung der Schieber (4) im Ablenkabschnitt (3a) dadurch erhalten ist, daß die Führungsflächen (17 bis 21) an jedem Ort längs des Ablenkabschnitts (3a) als Tangentenflächen an den Führungselementen (14 bis 17) anliegen.

12. Vorrichtung nach Anspruch 10, dadurch gekennzeichnet, daß die Führungsbahn (3) zur Konstanthaltung der Ausrichtung der Schieber (4) zumindest in ausgewählten Bereichen ein drittes Segment (25) mit auf ausgewählte Führungselemente (15,16) einwirkenden, seitlichen Führungsflächen aufweist.

13. Vorrichtung nach einem der Ansprüche 1 bis 12, dadurch gekennzeichnet, daß dem Rückführabschnitt (3b) eine Beschleunigungsvorrichtung (44) zugeordnet ist.

14. Vorrichtung nach Anspruch 13, dadurch gekennzeichnet, daß die Beschleunigungsvorichtung (44) einen Asynchron-Linearmotor enthält.
